# EUROPÄISCHE PATENTANMELDUNG

(11) **EP 4 484 341 A1**
(43) Veröffentlichungstag der Anmeldung: **01.01.2025**
(21) Anmeldenummer: 24183675.8
(22) Anmeldetag: 21.06.2024
(51) Int. Cl.: B65G 47/84, B65G 21/20

(54) **VORRICHTUNG UND EIN VERFAHREN ZUM AUSLEITEN VON OBJEKTEN SOWIE EINE ANLAGE ZUM HERSTELLEN UND/ODER BEHANDELN VON OBJEKTEN**

(30) Priorität: 29.06.2023 DE 102023117216
(71) Anmelder: KHS GmbH, 44143 Dortmund (DE)
(72) Erfinder: Lewin, Frank, 44143 Dortmund (DE); Fritsche, Claas, 44143 Dortmund (DE)

(57) **Zusammenfassung**

Die Erfindung betrifft eine Vorrichtung (10) zum Ausleiten von Objekten (14, 14'), umfassend eine Ausleiteinrichtung (12) zum Ausleiten von Objekten (14, 14'), die entlang eines Transportpfadabschnitts (11) der Objekte (14, 14') angeordnet ist, der sich entlang einer Transportrichtung (16) erstreckt, und mindestens ein zumindest quer zur Transportrichtung (16) bewegbares Ausleitelement (18) zum Verschieben von auszuleitenden Objekten (14, 14') quer zur Transportrichtung (16) aufweist, dadurch gekennzeichnet, dass die Vorrichtung (10) weiter eine Führungseinrichtung (20) zum Führen der auszuleitenden Objekte (14, 14') aufweist, die entlang einer der Ausleiteinrichtung (12) gegenüberliegenden Seite des Transportpfadabschnitts (11) angeordnet ist und mindestens ein zumindest quer zur Transportrichtung (16) bewegbares Führungselement (22) zum Führen eines von dem mindestens einen Ausleitelement (18) verschobenen Objekts aufweist. Mit der Erfindung wird eine Vorrichtung (10) bereitgestellt, die für erhöhte Transportgeschwindigkeiten ausgelegt ist.

## Beschreibung

Die Erfindung betrifft eine Vorrichtung und ein Verfahren zum Ausleiten von Objekten sowie eine Anlage zum Herstellen und/oder Behandeln von Objekten.

Bei der Herstellung von Objekten, insbesondere von Behältern, können die Objekte nach ihrer Herstellung entlang eines Transportpfads transportiert werden, um beispielsweise auf Fehler analysiert zu werden. Fehlerhafte Behälter können dann aussortiert werden, in dem sie aus dem Transportpfad entfernt werden. Weiter kann es sein, dass mehrere hintereinander hergestellte Objekte für Testzwecke entnommen werden sollen. Das Aussortieren bzw. das Entnehmen dieser Objekte kann beispielsweise mit einer Ausleitvorrichtung erfolgen, die die Objekte aus dem Transportpfad schiebt oder stößt.

Aus DE 10 2012 201 059 A1 ist beispielsweise bekannt, Objekte mittels Ausleitsegmenten auszuleiten. Die Ausleitsegmente werden dabei parallel und synchron zu den Objekten bewegt. Wenn das Objekt, mit dem ein Ausleitsegment mitbewegt wird, ausgeleitet werden soll, kann das Ausleitsegment das Objekt senkrecht zu den Transportpfad aus dem Transportpfad herausschieben. Dabei kann der Transport der Objekte entlang des Transportpfads mittels eines Förderbandes erfolgen. Parallel zu diesem Transportpfad kann ein weiteres Förderband angeordnet sein, auf das die auszuleitenden Objekte durch die Ausleitsegmente geschoben werden. Diese Vorrichtung ist jedoch lediglich für bestimmte maximale Transportgeschwindigkeiten der Objekte ausgelegt. Typischerweise betragen die Transportgeschwindigkeiten ca. 1,6 m/s. Bei höheren Transportgeschwindigkeiten können Fehler beim Ausleiten zu einem Anhalten der Produktion führen.

Aufgabe der Erfindung ist es, eine Vorrichtung und ein Verfahren bereitzustellen, die für höhere Transportgeschwindigkeiten ausgelegt sind.

Die Aufgabe wird durch die Merkmale der unabhängigen Ansprüche gelöst. Vorteilhafte Weiterbildungen sind Gegenstand der abhängigen Ansprüche sowie der folgenden Beschreibung.

Bei einer Vorrichtung zum Ausleiten von Objekten, umfassend eine Ausleiteinrichtung zum Ausleiten von Objekten, die entlang eines Transportpfadabschnitts der Objekte angeordnet ist, der sich entlang einer Transportrichtung erstreckt, und mindestens ein zumindest quer zur Transportrichtung bewegbares Ausleitelement zum Verschieben von auszuleitenden Objekten quer zur Transportrichtung aufweist, ist gemäß der Erfindung vorgesehen, dass die Vorrichtung weiter eine Führungseinrichtung zum Führen der auszuleitenden Objekte aufweist, die entlang einer der Ausleiteinrichtung gegenüberliegenden Seite des Transportpfadabschnitts angeordnet ist und mindestens ein zumindest quer zur Transportrichtung bewegbares Führungselement zum Führen eines von dem mindestens einen Ausleitelement verschobenen Objekts aufweist.

Mit der Erfindung wird einer Vorrichtung bereitgestellt, die zusätzlich zu der Ausleiteinrichtung, mit der die Objekte aus dem Transportpfadabschnitt verschoben werden können, eine Führungseinrichtung aufweist, mit deren Führungselementen die Objekte beim Verschieben durch die Ausleitelemente gestützt werden. Die Objekte werden vor dem Verschieben entlang des Transportpfadabschnitts in einer Transportrichtung bewegt. Die Führungselemente sind mit der Führungseinrichtung auf der den Ausleitelementen gegenüberliegenden Seite des Transportpfadabschnitts und damit auch der auszuleitenden Objekte angeordnet. Während mindestens ein Ausleitelement das auszuleitende Objekt quer, insbesondere senkrecht, zur Transportrichtung verschiebt, führt das Führungselement das Objekt auf der gegenüberliegenden Seite. Damit stellt das Führungselement gleichzeitig eine Stützfunktion für das Objekt bereit, so dass ein Umkippen des Objekts durch das Verschieben des Objektes mittels des Ausleitelements, insbesondere bei hohen Transport- und Verschiebegeschwindigkeiten, vermieden wird. Das Ausleitelement schiebt das Objekt beim Ausleiten damit gegen das Führungselement, so dass das Objekt beim Ausleiten zwischen dem Ausleitelement und dem Führungselement gehalten wird. Das auszuleitende Objekt wird durch das Ausleitelement und das Führungselement beidseitig geführt. Es können auch mehrere Ausleitelemente und mehrere Führungselemente beim Ausleiten an dem auszuleitenden Objekt angreifen. Durch das Vermeiden von umgefallenen Objekten beim Ausleiten werden Stops der Produktionslinie der Objekte vermieden, so dass eine höhere Produktionseffizienz erzielt werden kann. Damit werden auch Kosten eingespart. Weiter kann mit der Erfindung eine Erhöhung der Transportgeschwindigkeit der Objekte im Transportpfad erfolgen, ohne dass die Objekte beim Ausleiten Umkippen und dadurch Stops der Produktion zur Folge haben. Mit der Erfindung können Geschwindigkeiten für den Transport der Objekte von mindestens 2,6 m/s erreicht werden.

Gemäß einem Beispiel können das Ausleitelement und das Führungselement parallel zum Transportpfadabschnitt, vorzugsweise synchron zu den Objekten, bewegbar sein.

Das mindestens ein Ausleitelement und das mindestens eine Führungselement können damit relativ zum bewegten Objekt feststehen. Aus einer mit dem Objekt bewegten Ansicht führen das Ausleitelement und das Führungselement lediglich eine Bewegung quer zur Transportrichtung durch. Dies vereinfacht das Ausleiten und das Führen der Objekte beim Ausleiten.

Weiter können das Ausleitelement und das Führungselement beispielsweise an zwei einander gegenüberliegenden Seiten des auszuleitenden Objekts an das Objekt anlegbar sein.

Die Vorrichtung kann zum Beispiel zum Ausleiten eines Objekts zuerst zum Ansteuern des mindestens einen Führungselements zum Bewegen quer zur Transportrichtung bis an das Objekt ausgebildet sein und nach zumindest zeitweisem Kontakt des mindestens einen Führungselements mit dem auszuleitenden Objekt zum Ansteuern des mindestens einen Ausleitelements zum Bewegen des Objekts quer zur Transportrichtung ausgebildet sein.

In diesem Beispiel kann das Führungselement damit im Transportpfadabschnitt von nicht auszuleitenden Objekten beabstandet angeordnet sein. Das Führungselement wird dann lediglich zu einem Objekt bewegt, wenn das Objekt ausgeleitet werden soll. Erst, wenn das Führungselement das Objekt stützen kann, wird das Objekt mittels des entsprechenden Ausleitelements ausgeleitet.

Es ist jedoch auch denkbar, dass die Führungselemente an jedem Objekt angeordnet werden, das durch den Transportpfadabschnitt bewegt wird. Dann kann ein Ausleiten unmittelbar dann erfolgen, wenn das auszuleitende Objekt in den Transportpfadabschnitt eintritt.

Gemäß einem weiteren Beispiel kann die Vorrichtung zum Ausleiten eines auszuleitenden Objekts sowohl zum Ansteuern des mindestens einen Ausleitelements, das in Kontakt mit dem Objekt ist, zum Bewegen quer zur Transportrichtung ausgebildet ist als auch zum Ansteuern des mindestens einen Führungselements, das bevorzugt zumindest zeitweise gleichzeitig mit dem mindestens einen Ausleitelement in Kontakt mit dem auszuleitenden Objekt ist, ausgebildet sein.

Damit können sowohl das Ausleitelement als auch das Führungselement aktiv gesteuert werden. Alternativ kann das Führungselement durch das Verschieben des Objekts quer zur Transportrichtung mittels des Ausleitelements bewegt werden. Z. B. kann das Führungselement mittels einer Feder gegen das Objekt gedrückt werden, so dass bis zum Ende des Transportpfadabschnitts ein Kontakt zwischen dem Führungselement und dem Objekt besteht.

Weiter ist beispielsweise denkbar, dass die Vorrichtung eine Steuereinrichtung zum Steuern der Ausleiteinrichtung und der Führungseinrichtung aufweist.

Die Steuerung der Ausleiteinrichtung und der Führungseinrichtung kann auch durch eine externe Steuereinrichtung erfolgen.

Gemäß einem weiteren Beispiel können die Führungseinrichtung und die Ausleiteinrichtung zumindest teilweise aus im Wesentlichen baugleichen, bevorzugt identischen, Komponenten ausgebildet sein.

In diesem Beispiel kann sich lediglich die Ansteuerung der Führungseinrichtung von der Ausleiteinrichtung unterschieden. Dadurch können ggf. Kosten eingespart werden.

Weiter ist beispielsweise denkbar, dass der Transportpfadabschnitt mindestens einen Produktionsausgang für die nicht-ausgeleiteten Objekte und mindestens eine Ausleitung für die auszuleitenden Objekte aufweist, wobei die mindestens eine Ausleitung quer zur Transportrichtung versetzt zum Transportpfadabschnitt angeordnet ist.

Wenn mehrere Ausleitungen vorgesehen sind, können diese kaskadiert nacheinander in mehreren Ausleitstufen vorgesehen sein. Mit der Erfindung wird jedoch auch ermöglicht, dass mehrere Ausleitungen in einem gemeinsamen Ausleitabschnitt vorgesehen sein können. Durch das beidseitige Führen der Objekte beim Ausleiten können die Objekte präzise in eine Ausleitung gesteuert werden, wobei eine falsche Zuordnung vermieden wird.

Gemäß einem weiteren Beispiel kann die Vorrichtung ein erstes Transportband, das sich entlang des Transportpfadabschnitts erstreckt, und mindestens ein zweites Transportband, das sich zum Transportpfadabschnitt quer zur Transportrichtung versetzt parallel zum ersten Transportband erstreckt, aufweisen.

Die Objekte können daher entlang des Transportpfadabschnitts mittels des ersten Transportbands bewegt werden. Wenn die Objekte Behälter sind, können die Behälter beispielsweise aufrechtstehend bewegt werden. Beim Ausleiten können die Objekte mittels des anliegenden Ausleitelements und geführt von dem an dem Objekt anliegenden Führungselement auf das zweite Transportband bewegt werden. Das zweite Transportband kann unmittelbar an das erste Transportband angrenzen. Es können auch ein drittes Transportband und noch weitere Transportbänder vorgesehen werden, die sich parallel zu dem ersten und zweiten Transportband erstrecken.

Die Erfindung betrifft weiter eine Anlage zum Herstellen und/oder Behandeln von Objekten umfassend zumindest eine Vorrichtung nach der vorangegangenen Beschreibung und mindestens einem Transportpfad, entlang dem die Objekte transportierbar sind, wobei der Transportpfadabschnitt der Vorrichtung Teil des Transportpfads ist.

Vorteile und Wirkungen sowie Weiterbildungen der Anlage ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Weiter betrifft die Erfindung ein Verfahren zum Ausleiten von Objekten mittels mindestens einer Vorrichtung nach der vorangegangenen Beschreibung oder einer Anlage nach der vorangegangenen Beschreibung, wobei zum Ausleiten eines Objekts aus dem Transportpfadabschnitt mindestens ein Ausleitelement und mindestens ein Führungselement, die bevorzugt zumindest zeitweise gleichzeitig in Kontakt mit dem Objekt sind, quer zur Transportrichtung bewegt werden.

Es ist zum Beispiel denkbar, dass zuerst mindestens ein Führungselement an das auszuleitende Objekte bewegt wird, bis es in Kontakt mit dem Objekt positioniert oder bis zu einem definierten Sicherungsabstand zum Objekt positioniert an dieses heranbewegt ist, und danach sowohl das mindestens eine Führungselement als auch das mindestens eine entsprechend positionierte Ausleitelement zum Ausleiten des Objekts quer zur Transportrichtung bewegt werden. Das Führungselement muss dabei nicht zwingend den Kontakt mit dem Objekt halten, sondern kann in dem Sicherungsabstand zum Objekt quer zur Transportrichtung bewegt werden und lediglich eine Sicherung gegen Umfallen bereitstellen.

Vorteile und Wirkungen sowie Weiterbildungen des Verfahrens ergeben sich aus den Vorteilen und Wirkungen sowie Weiterbildungen der oben beschriebenen Vorrichtung und der Anlage. Zur Vermeidung von Wiederholungen wird daher in dieser Hinsicht auf die vorangegangene Beschreibung verwiesen.

Im Folgenden wird die Erfindung anhand einer beispielhaften Ausführungsform mittels der beigefügten Zeichnung beschrieben. Es zeigen:
- Figur 1a-c: eine schematische Darstellung eines ersten Beispiels der Vorrichtung zum Ausleiten von Objekten;
- Figur 2: eine schematische Darstellung eines zweiten Beispiels der Vorrichtung;
- Figur 3: eine schematische Darstellung eines dritten Beispiels der Vorrichtung;
- Figur 4: eine schematische Detaildarstellung der Vorrichtung;
- Figur 5: eine schematische Darstellung einer Anlage zum Herstellen und/oder Behandeln von Objekten; und
- Figur 6: ein Flussdiagramm des Verfahrens zum Ausleiten von Objekten.

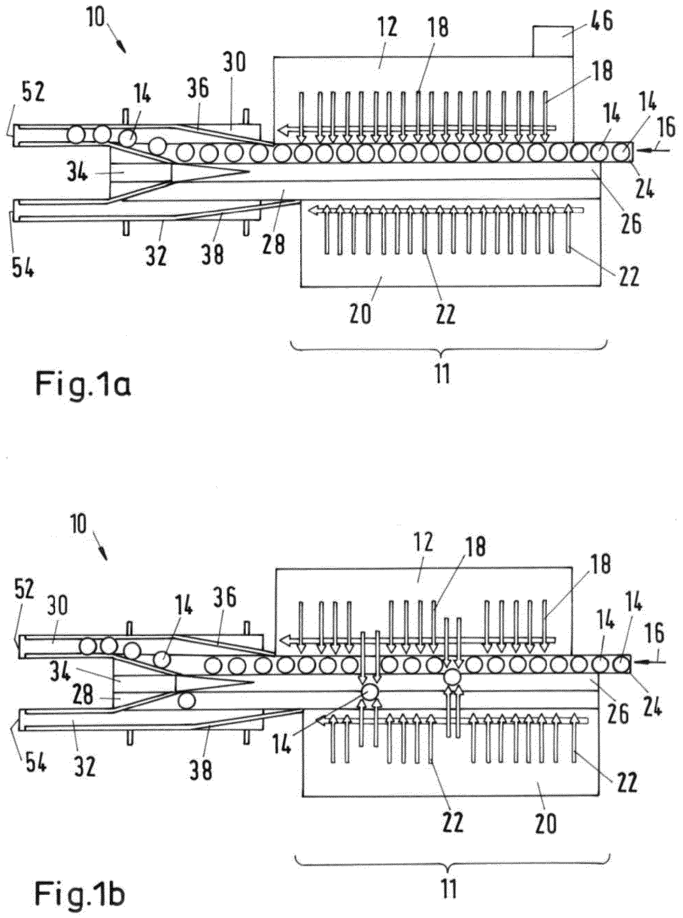

Die Vorrichtung zum Ausleiten von Objekten wird gemäß den Figuren 1a bis 1c im Folgenden in ihrer Gesamtheit mit dem Bezugszeichen 10 bezeichnet.

Die Vorrichtung 10 weist eine Ausleiteinrichtung 12 zum Ausleiten von Objekten 14, 14' auf, die in Figur 1a schematisch dargestellt ist. Die Ausleiteinrichtung 12 weist mindestens ein Ausleitelement 18 auf, das zum Verschieben von auszuleitenden Objekten 14' ausgebildet ist. Die Ausleiteinrichtung 12 weist in diesem Beispiel eine Vielzahl von Ausleitelementen 18 auf. Die Ausleitelemente 18 sind in Figur 1a schematisch als Pfeile dargestellt, können jedoch jede andere Form, zum Beispiel eine Stempelform, aufweisen. Weiter können mehrere Ausleitelemente 18 die Breite bzw. den Durchmesser eines Objekts 14, 14' ausfüllen und an dem Objekt 14, 14' angreifen.

Die Objekte 14, 14' können zum Beispiel Behälter sein, die aus Vorformlingen aus thermoplastischem Kunststoff gereckt wurden. Weiter werden die Objekte 14, 14' entlang eines Transportpfadabschnitts 11 entlang einer Transportrichtung 16 transportiert. Die Vorrichtung 10 kann daher beispielsweise einer Behälterherstellungsmaschine nachgeschaltet sein.

Die Ausleiteinrichtung 12 ist an dem Transportpfadabschnitt 11 angeordnet und erstreckt sich entlang der Transportrichtung 16. Das mindestens eine Ausleitelement 18 kann dabei die Objekte 14, 14' quer zur Transportrichtung 16 verschieben. Durch diese Verschiebung werden die Objekte 14, 14' aus dem Transportpfadabschnitt 11 bewegt.

Weiter weist die Vorrichtung 10 eine Führungseinrichtung 20 auf, die mindestens ein Führungselement 22 aufweist. Das mindestens eine Führungselement 22 ist quer zur Transportrichtung 16 beweglich angeordnet. Weiter ist das mindestens eine Führungselement 22 ausgebildet, ein Objekt 14, 14' zu führen, das von einem Ausleitelement 18 verschoben wird. Dazu ist die Führungseinrichtung 20 auf einer der Ausleiteinrichtung 12 gegenüberliegenden Seite des Transportpfadabschnitts 11 angeordnet. Dadurch sind auch das mindestens eine Führungselement 22 und das mindestens eine Ausleitelement 18 auf einander gegenüberliegenden Seiten des auszuleitenden Objekts 14' angeordnet. Ein auszuleitendes Objekt 14' kann damit zwischen einem Führungselement 22 und einem Ausleitelement 18 angeordnet werden.

In diesem Beispiel weist die Führungseinrichtung 20 eine Vielzahl von Führungselementen 22 auf, die schematisch als Pfeile dargestellt sind. Sie können jedoch jede andere Form, zum Beispiel eine Stempelform aufweisen. Weiter können mehrere Führungselemente 22 die Breite bzw. den Durchmesser des Objekts 14, 14' ausfüllen und an dem Objekt 14, 14' angreifen.

Die Führungseinrichtung 20 und die Ausleiteinrichtung 12 können zumindest teilweise aus im Wesentlichen baugleichen, vorzugsweise identischen, Komponenten ausgebildet sein und sich lediglich in der Ansteuerung der Führungselemente 20 bzw. Ausleitelemente 18 unterscheiden.

Sowohl die Ausleitelemente 18 als auch die Führungselemente 22 können parallel zur Transportrichtung 16 synchron mit den Objekten 14, 14' bewegt werden. Dazu können die Ausleitelemente 18 bzw. die Führungselemente 18 entlang einer geschlossenen Strecke bewegt werden. Ein Teil der geschlossenen Strecke kann der Rückführung der Ausleitelemente 18 bzw. der Führungselemente 18 dienen.

Entlang der Transportrichtung 16 findet im Wesentlichen keine Relativbewegung zwischen den Objekten 14, 14' und dem Ausleitelementen 18 bzw. den Führungselementen 22 statt, die synchron zu den Objekten 14, 14' bewegt werden.

Die Ausleitelemente 18 und die Führungselemente 22 sind jeweils für sich quer zur Transportrichtung 16 beweglich an der Ausleiteinrichtung 12 bzw. der Führungseinrichtung 20 gelagert. Durch die Beweglichkeit quer zur Transportrichtung 16 können die Ausleitelemente 18 bzw. die Führungselemente 22 zu dem Objekt 14, 14' bewegt werden und das Objekt 14, 14` bewegen bzw. führen.

Besonders vorteilhaft ist es, wenn die Ausleitelemente 18 und die Führungselemente 22 senkrecht zur Transportrichtung 16 beweglich sind.

Figur 1a zeigt weiter eine Vorrichtung 10, bei der kein Ausleitvorgang gestartet wurde. Alle Objekte 14 werden entlang des Transportpfadabschnitts 11 transportiert und werden nicht ausgeleitet. Vor dem Eintreten in die Vorrichtung 10 können die Objekte 14, 14` durch eine Messeinrichtung (hier nicht dargestellt) gemessen werden, um zu erfassen, welche Objekte 14, 14` in Ordnung sind oder welche ausgeleitet werden müssen.

Entlang des Transportpfadabschnitts 11 können die Objekte 14, 14` mittels eines ersten Transportbands 24, insbesondere eines Förderbands, transportiert werden. Wenn die Objekte 14, 14' Behälter sind, können die Behälter aufrechtstehend auf dem ersten Transportband 24 transportiert werden. Das erste Transportband 24 transportiert die Objekte 14, 14' an der Ausleiteinrichtung 12 und der Führungseinrichtung 20 vorbei. Die Bandgeschwindigkeit kann mindestens 2,6 m/s betragen, ohne dass die Behälter bzw. die Objekte 14, 14` beim Ausleiten umkippen. Weiter kann die Bandgeschwindigkeit in einem Bereich zwischen 0,5 m/s und 10 m/s, vorzugsweise zwischen 1 m/s und 5 m/s liegen.

Mittels einer Leiteinrichtung 34 können die Objekte 14, 14` nach Durchlauf des Transportpfadabschnitts 11 von dem ersten Transportband 24 auf ein benachbartes zweites Transportband 30 geleitet werden. Dieses zweite Transportband 30 kann als Produktionsausgang 52 angesehen werden, an dem die Objekte 14, 14' der weiteren Produktion bereitgestellt werden. Wenn die Objekte 14, 14' Behälter sind, kann zum Beispiel ein weiterer Transport zu einer Fülleinrichtung erfolgen.

Weiter kann ein erstes Leitblech 36 vorgesehen sein, mit dem die Objekte 14, 14` an dem ersten Transportband 24 und den zweiten Transportband 30 auf der der Leiteinrichtung 34 gegenüberliegenden Seite geleitet werden können.

Weiter kann eine Steuereinrichtung 46 vorgesehen sein, die zum Steuern der Ausleiteinrichtung 12 und der Führungseinrichtung 20 ausgebildet sein kann. Die Steuereinrichtung 46 kann dabei die Ausleitelemente 18 und die Führungselemente 22 ansteuern, um einen Ausleitvorgang für die Objekte 14, 14' zu beginnen.

Wenn Objekte 14, 14' ausgeleitet werden sollen, kann gemäß Figur 1b zunächst ein Führungselement 22, das mit dem auszuleitenden Objekt 14' entlang der Transportrichtung 16 synchron mitbewegt wird, zu dem entsprechenden Objekt 14' bewegt werden. Sobald das Führungselement 22 das auszuleitende Objekt 14' kontaktiert oder in einem definierten Sicherungsabstand derart nah angeordnet ist, dass ein Umfallen des Objekts 14' verhindert wird, kann das entsprechende auf der gegenüberliegenden Seite des Objekts 14' angeordnete Ausleitelement 18 quer zur Transportrichtung 16 in Richtung des Führungselements 22 bewegt werden. Das Führungselement 22 und das Ausleitelement 18 bewegen sich dann synchron quer zur Transportrichtung 16, wobei das Ausleitelement 18 das Objekt 14' quer zur Transportrichtung 16 an das Führungselement 22 schiebt. Das Führungselement 22 stützt dabei das Objekt 14', sodass ein Umkippen des Objekts 14' vermieden wird. Das Führungselement 22 muss dabei nicht zwingend in Kontakt mit dem Objekt 14' bleiben, während das Objekt 14` quer zur Transportrichtung bewegt wird, sondern kann von dem Objekt 14' in dem definierten Sicherungsabstand beabstandet bewegt werden, um lediglich eine Sicherungsfunktion gegen ein Umfallen des Objekts 14' bereitstellen.

Das Ausleitelement 18 und das Führungselement 22 können das auszuleitende Objekt 14' über ein drittes Transportband 26 zu einem vierten Transportband 28 verschieben bzw. führen. Das dritte Transportband 26 und das vierte Transportband 28 können sich dabei parallel zu dem ersten Transportband 24 erstrecken. Die auszuleitenden Objekte 14' werden nach Durchlauf des Transportpfadabschnitts 11 durch die Leiteinrichtung 34 auf ein fünftes Transportband 32 geleitet. Das fünfte Transportband 32 kann als Ausleitungsausgang bzw. weitere Ausleitung 54 angesehen werden, in dem die ausgeleiteten Objekte 14' bereitgestellt werden.

Es kann weiter ein zweites Leitblech 38 vorgesehen werden, dass die Objekte 14' an dem vierten Transportband 28 und fünften Transportband 32 auf der der Leiteinrichtung 34 gegenüberliegenden Seite leiten kann.

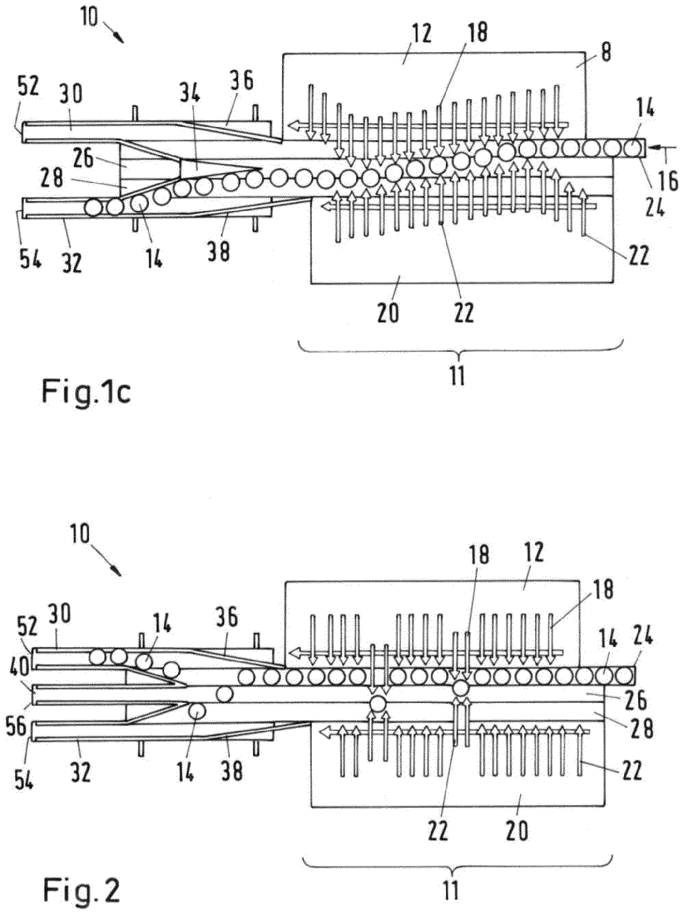

In Figur 1c wird mit der Vorrichtung 10 eine Dauerausleitung durchgeführt. Alle in die Vorrichtung 10 eintretenden Objekte 14, 14' werden durch die Ausleitelemente 18 und die Führungselemente 22 quer zur Transportrichtung 16 verschoben bzw. geführt, und in den Ausleitungsausgang 54 geleitet.

Insbesondere am Beginn des Transportpfads 11 ist aus Figur 1c ersichtlich, dass zunächst die Führungselemente 22 quer zur Transportrichtung 16 an die auszuleitenden Objekte 14' bewegt werden. Erst nachdem die Führungselemente 22 nahe der Objekte 14' oder in Kontakt mit den Objekten 14' sind, werden die Ausleitelemente 18 quer zur Transportrichtung 16 in Richtung der Führungselemente 22 bewegt. Die Führungselemente 22 bewegen sich dann mit dem Objekt 14' mit und können in Kontakt mit den Objekten 14' oder mit dem definierten Sicherungsabstand zu dem Objekten 14`, um zumindest eine Sicherung gegen Umfallen bereitzustellen, bewegt werden.

In Figur 2 wird ein weiteres Ausführungsbeispiel der Vorrichtung 10 dargestellt. In diesem Beispiel schließt sich an das dritte Transportband 26 eine sechstes Transportband 40 an, das eine weitere Ausleitung 56 aus der Vorrichtung 10 bereitstellt. Zur Ausleitung 56 können zum Beispiel Objekte 14, 14' ausgeleitet werden, die in einem Labor untersucht werden sollen. Dazu kann für eine gewisse Zeit eine Dauerausleitung erfolgen, um einer Serie von Objekten 14, 14' mit der richtigen Reihenfolge bereitstellen zu können, sodass eine Zuordnung der untersuchten Objekte 14, 14' mit beispielsweise Stationen der Herstelleinrichtungen bzw. Umformeinrichtung oder mit den Messungen einer Messeinrichtung erfolgen kann.

Es können auch weitere Ausgänge vorgesehen werden. Dazu können beispielsweise weiterer Transportbänder an der Vorrichtung 10 als Ausgänge vorgesehen werden, wobei die Ausleiteinrichtung 12 und die Führungseinrichtung 20 die Objekte 14, 14' entsprechend positionieren.

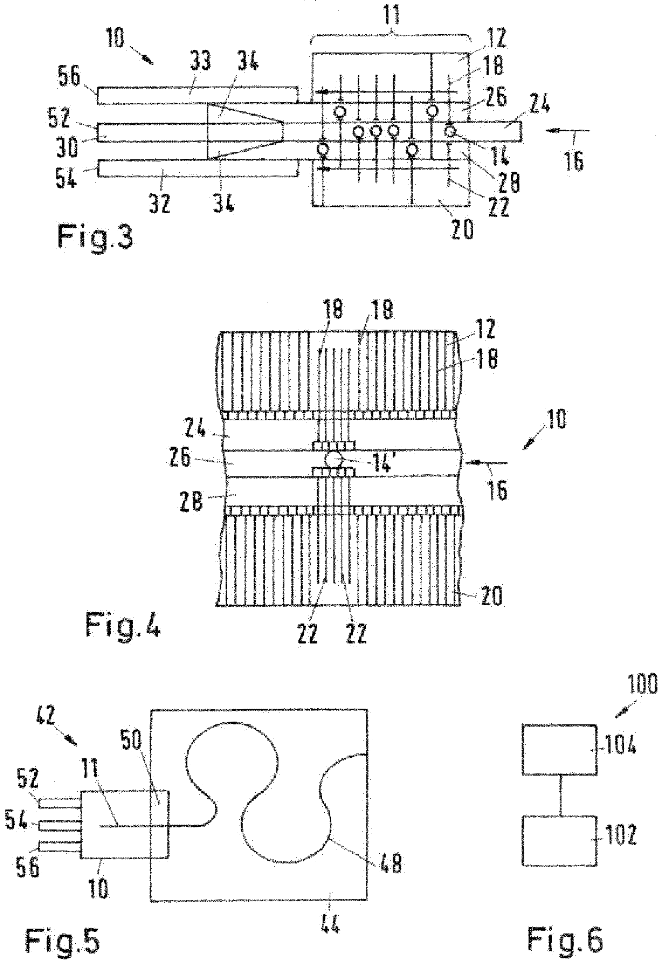

In einem weiteren Ausführungsbeispiel der Vorrichtung 10 kann gemäß Figur 3 das erste Transportband 24 mittig in der Vorrichtung 10 angeordnet sein. Das dritte Transportband 26 und das vierte Transportband 28 können jeweils links und rechts seitlich an den ersten Transportband 24 angeordnet sein. Wenn ein Objekt 14 nicht ausgeleitet werden soll, kann das Objekt 14 ohne eine Verschiebung quer zur Transportrichtung 16 durch die Vorrichtung 10 zum zweiten Transportband 30 transportiert werden, das sich in Transportrichtung 16 unmittelbar an das erste Transportband 24 anschließen kann.

Eine Ausleitung kann über das fünfte Transportband 32 erfolgen, dass neben dem vierten Transportband 28 angeordnet ist. Weiter kann mittels eines siebten Transportbands 33 eine weitere Ausleitung 56 für die Objekte 14, 14' aus der Vorrichtung 10 bereitgestellt werden. Das siebte Transportband 33 kann neben dem dritten Transportband 26 angeordnet sein.

Im Gegensatz zu den vorher erläuterten Ausführungsbeispielen kann in diesem Ausführungsbeispiel eine Ausleitung durch eine Verschiebung der Objekte 14, 14' in beide Richtungen quer zur Transportrichtung 16 erfolgen. Je nachdem in welchen Ausgang die Objekte 14, 14` ausgeleitet werden sollen, kann die Ausleiteinrichtung 12 die Ausleitfunktion oder die Führungsfunktion übernehmen. Analoges gilt für die Führungseinrichtung 20. Dementsprechend können in diesem Ausführungsbeispiel sowohl die Ausleiteinrichtung 12 als auch die Führungseinrichtung 20 als Ausleit-/Führungseinrichtung bezeichnet werden. Analoges gilt für die Ausleitelemente 18 und die Führungselemente 22.

In diesem Beispiel ist es besonders vorteilhaft, wenn die Ausleiteinrichtung 12 baugleich mit der Führungseinrichtung 20 ist.

In Figur 4 ist eine Detailansicht der Vorrichtung 10 dargestellt. Die Ausleitelemente 18 und die Führungselemente 22 weisen in diesem Beispiel eine Stempelform auf. Der Kopf des Stempels ist dabei in Richtung Transportpfadabschnitts 11 ausgerichtet. Weiter weist der Kopf des Stempels eine Breite auf, die geringer als der Durchmesser des auszuleitenden Objekts 14' ist. Daher können mehrere Ausleitelemente 18 und mehrere Führungselemente 22 verwendet werden, um das Objekt 14' quer zur Transportrichtung 16 zu verschieben.

Figur 5 zeigt eine Anlage 42 zum Herstellen und/oder Behandeln von Objekten 14, 14'. Die Anlage 42 weist mindestens eine Vorrichtung 10 gemäß der vorangegangenen Beschreibung auf. Durch die Anlage 42 erstreckt sich ein Transportpfad 48. Die Objekte 14, 14' werden entlang des Transportpfads 48 durch die Anlage 42 bewegt. Der Transportpfadabschnitt 11 der Vorrichtung 10 ist Teil des Transportpfads 48 und kann beispielsweise an einen Abschnitt des Transportpfads 48 angrenzen, der sich durch eine Herstellungsmaschine 44 für die Objekte 14, 14' erstreckt. Die Herstellungsmaschine 44 kann beispielsweise eine Behälterherstellungsmaschine sein, in der Vorformlinge aus Kunststoff zu Behältern umgeformt werden.

Unmittelbar vor der Vorrichtung 10 kann am Transportpfad 48 eine Messeinrichtung 50 der Anlage 42 angeordnet sein, an der die Objekte 14, 14' vorbei transportiert werden. Mit der Messeinrichtung 50 kann erfasst werden, ob die Objekte 14, 14' in Ordnung sind oder nicht in Ordnung sind.

Diese Information und die Information, welchem Objekt 14, 14' das Messergebnis zuzuordnen ist, kann an die Vorrichtung 10 übermittelt werden. Auf diese Weise kann die Vorrichtung 10 das betreffende Objekt 14' ausleiten.

In Figur 6 ist ein Flussdiagramm für das Verfahren 100 zum Ausleiten von Objekten 14, 14' dargestellt. In einem ersten optionalen Schritt 104 kann zuerst das mindestens eine Führungselement 22 an das auszuleitende Objekt 14' bewegt werden. Die Bewegung findet dabei quer zur Transportrichtung 16 des Objekts 14' statt.

Sobald das Führungselement 22 in Kontakt mit dem auszuleitenden Objekt 14' oder bis zu einem definierten Sicherungsabstand zum Objekt 14` positioniert ist, kann danach sowohl das mindestens eine Führungselement 22 als auch das mindestens eine Ausleitelement 18 quer zur Transportrichtung 16 bewegt werden. Dabei wird ein Ausleitelement 18 bewegt, das in Kontakt mit dem Objekt 14' sein kann bzw. seitlich zur Transportrichtung 16 auf gleicher Höhe mit dem auszuleitenden Objekt 14' ist.

Das Führungselement 22 und das Ausleitelement 18 können sich synchron mit dem Objekt 14' parallel zur Transportrichtung 16 bewegen. Das Führungselement 22 muss nicht zwingend in Kontakt mit dem Objekt 14' bleiben, sondern kann auch beispielsweise den definierten Sicherungsabstand zum Objekt 14' einhalten.

Gemäß Schritt 102 werden das Ausleitelement 18 und das Führungselement 22, die bevorzugt zumindest zeitweise gleichzeitig in Kontakt mit dem Objekt 14' sind, quer zur Transportrichtung 49 bewegt. Das Ausleitelement 18 kann dabei das Objekt 14' schieben und das Führungselement 22 das Objekt 14, 14' stützen.

Weiter ist denkbar, dass in einem anderen Ausführungsbeispiel des Führungselement 22 die Schiebefunktion und das Ausleitelement 18 die Stützfunktion übernimmt. Dann wird das Objekt 14' in die entgegengesetzte Richtung wie in den oben erläuterten Beispielen bewegt.

Das oben beschriebene Beispiel dient in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein.

### Bezugszeichenliste

- 10: Vorrichtung zum Ausleiten von Objekten
- 11: Transportpfadabschnitt
- 12: Ausleiteinrichtung
- 14: Objekt
- 16: Transportrichtung
- 18: Ausleitelement
- 20: Führungseinrichtung
- 22: Führungselement
- 24: erstes Transportband
- 26: drittes Transportband
- 28: viertes Transportband
- 30: zweites Transportband
- 32: fünftes Transportband
- 34: Leiteinrichtung
- 36: erstes Leitblech
- 38: zweites Leitblech
- 40: sechstes Transportband
- 42: Anlage zum Herstellen und/oder Behandeln von Objekten
- 44: Herstellungsmaschine
- 46: Steuereinrichtung
- 48: Transportpfad
- 50: Messeinrichtung
- 52: Produktionsausgang
- 54: Ausleitung
- 56: Ausleitung

## Patentansprüche

1. Vorrichtung (10) zum Ausleiten von Objekten (14, 14'), umfassend eine Ausleiteinrichtung (12) zum Ausleiten von Objekten (14, 14'), die entlang eines Transportpfadabschnitts (11) der Objekte (14, 14') angeordnet ist, der sich entlang einer Transportrichtung (16) erstreckt, und mindestens ein zumindest quer zur Transportrichtung (16) bewegbares Ausleitelement (18) zum Verschieben von auszuleitenden Objekten (14, 14') quer zur Transportrichtung (16) aufweist, **dadurch gekennzeichnet, dass** die Vorrichtung (10) weiter eine Führungseinrichtung (20) zum Führen der auszuleitenden Objekte (14, 14') aufweist, die entlang einer der Ausleiteinrichtung (12) gegenüberliegenden Seite des Transportpfadabschnitts (11) angeordnet ist und mindestens ein zumindest quer zur Transportrichtung (16) bewegbares Führungselement (22) zum Führen eines von dem mindestens einen Ausleitelement (18) verschobenen Objekts aufweist.

2. Vorrichtung (10) nach Anspruch 1, **dadurch gekennzeichnet, dass** das Ausleitelement (18) und das Führungselement (22) parallel zum Transportpfadabschnitt (11), vorzugsweise synchron zu den Objekten (14, 14'), bewegbar sind.

3. Vorrichtung (10) nach einem der Ansprüche 1 oder 2, **dadurch gekennzeichnet, dass** die Vorrichtung (10) zum Ausleiten eines Objekts (14, 14') zuerst zum Ansteuern des mindestens einen Führungselements (22) zum Bewegen quer zur Transportrichtung (16) bis an das Objekt (14, 14') ausgebildet ist und nach Kontakt des mindestens einen Führungselements (22) mit dem auszuleitenden Objekt (14, 14') zum Ansteuern des mindestens einen Ausleitelements (16) zum Bewegen des Objekts (14, 14') quer zur Transportrichtung (16) ausgebildet ist.

4. Vorrichtung (10) nach einem der vorangegangenen Ansprüche, **dadurch gekennzeichnet, dass** die Vorrichtung (10) zum Ausleiten eines auszuleitenden Objekts (14, 14') sowohl zum Ansteuern des mindestens einen Ausleitelements (16), das in Kontakt mit dem Objekt (14, 14') ist, zum Bewegen quer zur Transportrichtung (16) ausgebildet ist als auch zum Ansteuern des mindestens einen Führungselements (22), das bevorzugt zumindest zeitweise gleichzeitig mit dem mindestens einen Ausleitelement (18) in Kontakt mit dem auszuleitenden Objekt (14, 14') ist, ausgebildet ist.

5. Vorrichtung (10) nach Anspruch 3 oder 4, **dadurch gekennzeichnet, dass** die Vorrichtung (10) eine Steuereinrichtung (46) zum Steuern der Ausleiteinrichtung (12) und der Führungseinrichtung (20) aufweist.

6. Vorrichtung (10) nach einem der vorangegangenen Ansprüche, **dadurch gekennzeichnet, dass** die Führungseinrichtung (20) und die Ausleiteinrichtung (12) zumindest teilweise aus im Wesentlichen baugleichen, bevorzugt identischen, Komponenten ausgebildet sind.

7. Vorrichtung (10) nach einem der vorangegangenen Ansprüche, **dadurch gekennzeichnet, dass** der Transportpfadabschnitt (11) mindestens einen Produktionsausgang (52) für die nicht-ausgeleiteten Objekte (14, 14') und mindestens eine Ausleitung (54, 56) für die auszuleitenden Objekte (14, 14') aufweist, wobei die mindestens eine Ausleitung (54, 56) quer zur Transportrichtung (16) versetzt zum Transportpfadabschnitt (11) angeordnet ist.

8. Vorrichtung (10) einem nach einem der vorangegangenen Ansprüche, **dadurch gekennzeichnet, dass** die Vorrichtung (10) ein erstes Transportband (24), das sich entlang des Transportpfadabschnitts (11) erstreckt, und mindestens ein zweites Transportband (26, 28), das sich zum Transportpfadabschnitt (11) quer zur Transportrichtung (16) versetzt parallel zum ersten Transportband (24) erstreckt, aufweist.

9. Anlage (42) zum Herstellen und/oder Behandeln von Objekten (14, 14') umfassend zumindest eine Vorrichtung (10) nach einem der vorangegangenen Ansprüche und mindestens einem Transportpfad (48), entlang dem die Objekte (14, 14') transportierbar sind, wobei der Transportpfadabschnitt (11) der Vorrichtung (10) Teil des Transportpfads (48) ist.

10. Verfahren (100) zum Ausleiten von Objekten (14, 14') mittels mindestens einer Vorrichtung (10) nach einem der Ansprüche 1 bis 8 oder einer Anlage nach Anspruch 9, wobei zum Ausleiten eines Objekts (14, 14') aus dem Transportpfadabschnitt (11) mindestens ein Ausleitelement (18) und mindestens ein Führungselement (22), die bevorzugt zumindest zeitweise gleichzeitig in Kontakt mit dem Objekt (14, 14') sind, quer zur Transportrichtung (16) bewegt (102) werden.

11. Verfahren nach Anspruch 10, **dadurch gekennzeichnet, dass** zuerst mindestens ein Führungselement (22) an das auszuleitende Objekte (14, 14') bewegt wird, bis es in Kontakt mit dem Objekt (14, 14') positioniert oder bis zu einem definierten Sicherungsabstand zum Objekt (14, 14') positioniert an dieses heranbewegt ist, und danach sowohl das mindestens eine Führungselement (22) als auch das mindestens eine entsprechend positionierte Ausleitelement (18)zum Ausleiten des Objekts (14, 14') quer zur Transportrichtung (16) bewegt (104) werden.
